# EUROPEAN PATENT APPLICATION

(11) **EP 4 810 530 A1**
(43) Date of publication of application: **23.09.2026**
(21) Application number: 25164528.9
(22) Date of filing: 18.03.2025
(51) Int. Cl.: C08F 210/16, C08F 4/659

(54) **PROCESS FOR PRODUCING ETHYLENE-1-BUTENE COPOLYMERS**

(71) Applicant: Borealis GmbH, 1020 Vienna (AT)
(72) Inventor: CHENG, Joy Jie, 4021 Linz (AT); TOULOUPIDIS, Vasileios, 4021 Linz (AT)
(74) Representative: Kador & Partner Part mbB

(57) **Abstract**

The invention concerns a solution polymerization process for producing an ethylene-1-butene copolymer, the process comprising the steps of
a) feeding ethylene, 1-butene, a metallocene catalyst system and a solvent into a first reactor,
b) polymerizing in the first reactor ethylene and 1-butene in the presence of the metallocene catalyst system and the solvent at a pressure of from 50 to 300 bar and a temperature of from 95 to 135 °C to form the ethylene-1-butene copolymer,
wherein the metallocene catalyst system comprises, or consists of,
(i) a metallocene complex of formula (I), 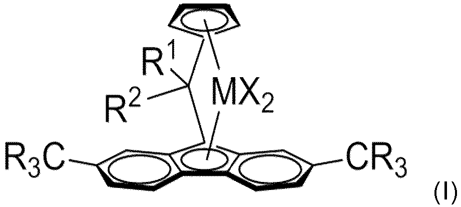 wherein
M is Hafnium,
R are the same or different from each other and can be a saturated linear or branched C₁ to C₁₀ alkyl, preferably all R are the same and are a linear or branched C₁ to C₃ alkyl, more preferably all R are a C₁ alkyl group,
R¹ is an unsubstituted C₆ to C₁₀ aryl, preferably phenyl and
R² is a C₄ to C₂₀ cycloalkyl group or a C₄ to C₆ alkenyl groups,
X is a C₁ to C₆ alkyl, preferably methyl, and

(ii) a cocatalyst.

c) withdrawing the ethylene-1-butene copolymer from the first reactor,
characterized in that the ethylene-1-butene copolymer has a melt flow rate MFR₂, measured according to ISO1133 at 190 °C and a load of 2.16 kg, in the range of from 0.1 to 990 g/10 m in or in the range of from 47 to 990 g/10 min.

## Description

The present invention relates to a process for producing ethylene-1-butene copolymers and ethylene-1-butene copolymers obtained by this process.

Among polyolefin plastomers and polyolefin elastomers ethylene alpha-olefin copolymers (EOC) are widely used. Ethylene alpha-olefin plastomers are used in a variety of applications, such as sealing, flexible and rigid packaging. Ethylene alpha-olefin copolymers are in particular used as blending partner for impact modification of polypropylene homo- and copolymers. Ethylene alpha-olefin elastomers are used for applications such as interior and exterior car parts, adhesives, cable compounds.

Ethylene copolymers are also used for making films or for solar applications.

Ethylene copolymers, such as ethylene-1-butene copolymers, can be prepared by a high temperature solution polymerization process with temperatures well above 140 °C and up to even 250 °C. The drawback of having such high temperatures is the higher energy consumption and plant operating safety issues.

There is thus a need in the art for a solution polymerization process for producing ethylene-1-butene copolymers wherein the process can be conducted at low temperatures of not more than 135 °C, and even at temperatures as low as 95 °C. Furthermore, there is a need that this process can provide ethylene-1-butene copolymers having a certain range of molecular weight distribution and at the same time having a desired butene content.

It is thus an object of the present invention to provide for a solution polymerization process for producing ethylene-1-butene copolymers wherein the process can be conducted at low temperatures, such as not more than 135 °C.

It is a further object of the invention to provide a solution polymerization process for producing ethylene-1-butene copolymers having a certain range of molecular weight distribution, a certain molecular weight and at the same time having a desired butene content.

In the present invention it has been surprisingly found that the solution polymerization process for producing ethylene-1-butene copolymers can be conducted at low temperatures of not more than 135 °C, or not more than 110°C, in the presence of a specific metallocene catalyst.

The invention thus provides a solution polymerization process for producing an ethylene-1-butene copolymer, the process comprising, or consisting of, the steps of
a) feeding ethylene, 1-butene, a metallocene catalyst system and a solvent into a first reactor,
b) polymerizing in the first reactor ethylene and 1-butene in the presence of the metallocene catalyst system and the solvent at a pressure of from 50 to 300 bar and a temperature of from 95 to 135 °C to form the ethylene-1-butene copolymer,
   wherein the metallocene catalyst system comprises, or consists of,
   (i) a metallocene complex of formula (I), 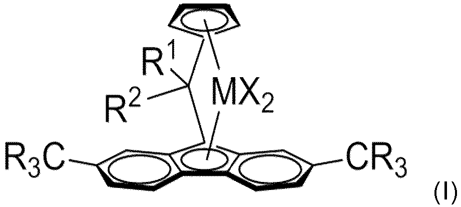 wherein
      M is Hafnium,
      R are the same or different from each other and can be a saturated linear or branched C₁ to C₁₀ alkyl, preferably all R are the same and are a linear or branched C₁ to C₃ alkyl, more preferably all R are a C₁ alkyl group,
      R¹ is an unsubstituted C₆ to C₁₀ aryl, preferably phenyl and
      R² is a C₄ to C₂₀ cycloalkyl group or a C₄ to C₆ alkenyl groups,
      X is a C₁ to C₆ alkyl, preferably methyl, and
   (ii) a cocatalyst.
c) withdrawing the ethylene-1-butene copolymer from the first reactor,
characterized in that the ethylene-1-butene copolymer has a melt flow rate MFR₂, measured according to ISO1133 at 190 °C and a load of 2.16 kg, in a range of from 0.1 to 990 g/10 min or in the range of from 47 to 990 g/10 min.

The solution polymerization process for producing an ethylene-1-butene copolymer according to the invention has surprising advantages. The main advantage is that can be conducted in the presence of a specific metallocene catalyst at low temperatures of not more than 135 °C, or not more than 110°C, and down to even 95 °C.

A further advantage is that operating the solution polymerization process of the invention at temperatures of 95 °C to about 100°C in the presence of a specific metallocene catalyst surprisingly allows the production of ethylene-1-butene copolymers with a weight average molecular weight (Mw) exceeding 500 000 g/mol and at the same time maintaining a rather narrow molecular weight distribution (MWD), such as between 2.0 and 4.0.

Preferably in step a) ethylene, 1-butene, the metallocene catalyst system and the solvent are continuously fed into the first reactor.

The solution polymerization process of the invention is a low temperature solution polymerization process, using a polymerization temperature in step b) of not more than 135 °C. Preferably the polymerization temperature in the first reactor in step b) is not more than 130°C, more preferably not more than 120 °C, more preferably not more than 110 °C, and most preferably less than 100 °C. Preferably, the polymerization temperature in the first reactor in step b) is at least 95 °C. It has been surprisingly found that in particular in the range of from 95 °C and 100 °C ethylene-1-butene copolymers with a weight average molecular weight (Mw) exceeding 500 000 g/mol and at the same time maintaining a rather narrow molecular weight distribution (MWD), such as between 2.0 and 4.0, can be obtained.

The pressure in the reactor depends on the temperature, on one hand, and the type and the amount of the comonomer, on the other hand. The pressure in the first reactor in step b) is suitably from 50 to 300 bar, preferably from 60 to 250 bar, more preferably from 70 to 200 bar, and most preferably 100 to 160 bar.

The solution polymerization process of the invention includes a first reactor and preferably further includes a second reactor downstream of the first reactor, more preferably further includes a second reactor downstream of the first reactor and a third reactor downstream of the second reactor. Suitable reactors include unstirred or stirred, spherical, cylindrical and tank-like vessels and recirculating loop reactors and tubular reactors. Such reactors typically include feeding points for monomer, optional comonomer, solvent, catalyst and optional other reactants and additives and withdrawal points for polymer solutions. In addition, the reactors may include heating or cooling means.

The solvent in step b) is preferably a hydrocarbon solvent. The hydrocarbon solvent is preferably a C₅-₁₂-hydrocarbon, which may be unsubstituted or substituted by C₁-₄ alkyl group, selected from pentane, methyl pentane, hexane, heptane, octane, cyclohexane, methylcyclohexane and hydrogenated naphtha, more preferably an unsubstituted C₆-₁₀-hydrocarbon, and most preferably hexane.

In addition, other components may be added into the reactor. It is known to feed hydrogen into the reactor for controlling the molecular weight of the polymer formed during the polymerization. The use of different antifouling compounds is also already known in the art. In addition, different kinds of activity boosters or activity retarders may be used for controlling the activity of the catalyst.

Preferably, the metallocene catalyst system comprises, or consists of,
(i) at least one metallocene complex of formula (I) as defined in claim 1,
(ii) an aluminoxane cocatalyst and/or a boron containing cocatalyst, and
(iii) optionally an aluminium alkyl compound Al(R⁶)₃, with R⁶ being a linear or branched C₂-C₈-alkyl group.

Preferably, the metallocene complex of formula (I) is a metallocene complex of formula (Ia) 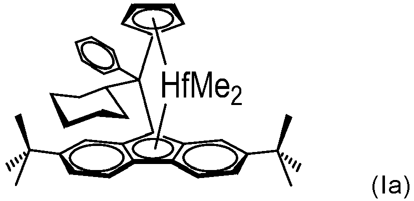 ((Phenyl)(cyclohexyl)methylene(cyclopentadienyl)(2,7-di-tert-butylfluoren-9-yl)hafnium dimethyl), or
the metallocene complex of formula (I) is a metallocene complex of formula (Ib) 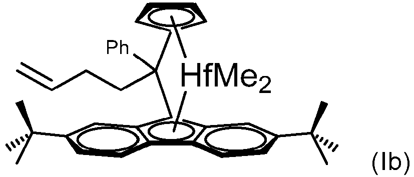
((Phenyl)(3-buten-1-yl)methylene(cyclopentadienyl) (2,7-di-tert-butylfluoren-9-yl) hafnium dimethyl),
wherein the cocatalyst (ii) is a boron containing cocatalyst.

Most preferably, the metallocene complex of formula (I) is (Phenyl)(cyclohexyl)methylene(cyclopentadienyl)(2,7-di-tert-butylfluoren-9-yl)hafnium dimethyl).

The above mentioned metallocene complexes of formulae (I), (Ia) and (Ib) and their preparation are described in more detail in WO2018108917 and WO2018108918.

As cocatalyst (ii) either an aluminoxane or a boron containing cocatalyst or mixtures therefrom can be used.

The aluminoxane cocatalyst can be one of formula (II) 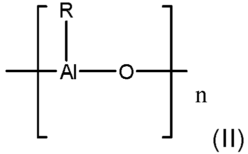 where n is from 6 to 20 and R has the meaning below.

Aluminoxanes are formed on partial hydrolysis of organoaluminum compounds, for example those of the formula AlR₃, AlR₂Y and Al₂R₃Y₃ where R can be, for example, C₁-C₁₀-alkyl, preferably C₁-C₅-alkyl, or C₃-C₁₀-cycloalkyl, C₇-C₁₂-arylalkyl or -alkylaryl and/or phenyl or naphthyl, and where Y can be hydrogen, halogen, preferably chlorine or bromine, or C₁-C₁₀-alkoxy, preferably methoxy or ethoxy. The resulting oxygen-containing aluminoxanes are not in general pure compounds but mixtures of oligomers of the formula (II).

The preferred aluminoxane is methylaluminoxane (MAO).

Since the aluminoxanes used according to the invention as cocatalysts are not, owing to their mode of preparation, pure compounds, the molarity of aluminoxane solutions hereinafter is based on their aluminium content.

The molar ratio of Al in the aluminoxane to the transition metal of the metallocene may be in the range of 1:1 to 2000:1 mol/mol, preferably 10:1 to 1000:1, more preferably 50:1 to 500:1 mol/mol.

Suitable amounts of cocatalyst will be well known to the skilled man.

In an embodiment of the present invention aluminoxane (ii), preferably methylaluminoxane, and an aluminium alkyl compound of the formula Al(R⁶)₃ with R⁶ being a linear or branched C₂-C₈-alkyl group (iii) are used as cocatalyst.

In this case the cocatalyst is preferably a reaction product of (ii) the aluminoxane, preferably methylaluminoxane with (iii) the aluminium alkyl compound, such as tri-iso-butyl aluminum, tri-iso-hexyl aluminium, tri-n-octyl aluminum, tri-iso-octyl aluminium and the like. The ratio between methylalumoxane and the aluminium alkyl compound can be between 10:1 and 1:10, preferably 5:1 to 1:5, most preferably 3:1 to 1:3 moles of Al in the methylalumoxane to moles of aluminium of the aluminium alkyl compound. The reaction between methylaluminoxane and the aluminium alkyl compound is carried out by mixing the two components in a suitable solvent, which can be aromatic or aliphatic, at a temperature between - 50° to +80°C, preferably between 10° and 50°C, more preferably between 20° and 40°C.

Boron based cocatalysts of interest include boron compounds containing a borate 3⁺ ion, i.e. borate compounds. These compounds generally contain an anion of formula:

(Z)₄B⁻ (III)

where Z is an optionally substituted phenyl derivative, said substituent being a halo-C₁₋₆-alkyl or halo group. Preferred options are fluoro or trifluoromethyl. Most preferably, the phenyl group is perfluorinated.

Such ionic cocatalysts preferably contain a non-coordinating anion such as tetrakis(pentafluorophenyl)borate.

Suitable counterions are protonated amine or aniline derivatives or phosphonium ions. These may have the general formula (IV) or (V):

NQ₄⁺ (IV) or PQ₄⁺ (V)

where Q is independently H, C₁₋₆-alkyl, C₃₋₈ cycloalkyl, phenyl-C₁₋₆-alkylene- or optionally substituted Ph. Optional substituents may be C₁₋₆-alkyl, halo or nitro. There may be one or more than one such substituent. Preferred substituted Ph groups include therefore para-substituted phenyl, preferably tolyl or dimethylphenyl.

It is preferred if at least one Q group is H, thus preferred compounds are those of formula:

NHQ₃⁺ (VI) or PHQ₃⁺ (VII)

Preferred phenyl-C₁₋₆-alkyl-groups include benzyl.

Suitable counterions therefore include: methylammonium, anilinium, dimethylammonium, diethylammonium, N-methylanilinium, diphenylammonium, N,N-dimethylanilinium, trimethylammonium, triethylammonium, tri-n-butylammonium, methyldiphenylammonium, p-bromo-N,N- dimethylanilinium or p-nitro-N,N-dimethylanilinium, especially dimethylammonium or N,N-dimethylanilinium. The use of pyridinium as an ion is a further option.

Phosphonium ions of interest include triphenylphosphonium, triethylphosphonium, diphenylphosphonium, tri(methylphenyl)phosphonium and tri(dimethylphenyl)phosphonium.

A more preferred counterion is trityl (CPh₃⁺) or analogues thereof in which the Ph group is functionalised to carry one or more alkyl groups. Highly preferred borates of use in the invention therefore comprise the tetrakis(pentafluorophenyl)borate ion.

Preferred ionic compounds which can be used according to the present invention include:
tributylammoniumtetra(pentafluorophenyl)borate,
tributylammoniumtetra(trifluoromethylphenyl)borate,
tributylammoniumtetra-(4-fluorophenyl)borate,
N,N-dimethylcyclohexylammoniumtetrakis-(pentafluorophenyl)borate,
N,N-dimethylbenzylammoniumtetrakis(pentafluorophenyl)borate,
N,N-dimethylaniliniumtetrakis(pentafluorophenyl)borate,
N,N-di(propyl)ammoniumtetrakis(pentafluorophenyl)borate, di(cyclohexyl)ammoniumtetrakis(pentafluorophenyl)borate,
triphenylcarbeniumtetrakis(pentafluorophenyl)borate,
ferroceniumtetrakis(pentafluorophenyl)borate.

Preference is given to triphenylcarbeniumtetrakis(pentafluorophenyl) borate,
N,N- dimethylcyclohexylammoniumtetrakis(pentafluorophenyl)borate,
N,N- dimethylbenzylammoniumtetrakis(pentafluorophenyl)borate or
N,N-dimethylaniliniumtetrakis(pentafluorophenyl)borate.

More preferred borates are triphenylcarbeniumtetrakis(pentafluorophenyl) borate and N,N-dimethylaniliniumtetrakis(pentafluorophenyl)borate.
N,N-dimethylaniliniumtetrakis(pentafluorophenyl)borate is most preferred.

It is further possible to add an aluminium alkyl compound. Suitable aluminium alkyl compounds are compounds of the formula (VIII) AlR₃ with R being a linear or branched C2-C8-alkyl group.

Preferred aluminium alkyl compounds are triethylaluminium, triisobutylaluminium, tri-isohexylaluminium, tri-n-octylaluminium and tri-isooctylaluminium.

Suitable amounts of cocatalyst will be well known to the skilled man.

The molar ratio of boron to the metal ion of the metallocene may be in the range 0.5:1 to 10:1 mol/mol, preferably 1:1 to 10:1, especially 1:1 to 5:1 mol/mol.

Even more preferred is a molar ratio of boron to the metal ion of the metallocene from 1:1 to less than 2:1 mol/mol, e.g. from 1:1 to 1.8:1 or 1:1 to 1.5:1.

According to the present invention preferably a boron containing cocatalyst, as described above, is used.

The ethylene-1-butene copolymer withdrawn from the first reactor in step c) has a melt flow rate MFR₂, measured according to ISO1133 at 190 °C and a load of 2.16 kg, in a range of from 0.1 to 990 g/10 min, preferably in the range of from 0.1 to 500 g/10 min, more preferably from 0.1 to 100 g/10 min, and most preferably from 0.5 to 20 g/10 min. Ethylene-1-butene copolymers having a melt flow rate MFR₂ of from 0.5 to 20 g/10 min are particularly useful for solar applications.

In a specific embodiment, the ethylene-1-butene copolymer has a melt flow rate MFR₂, measured according to ISO1133 at 190 °C and a load of 2.16 kg, in the range of from 47 to 990 g/10 min, preferably 50 to 500 g/10 min, more preferably from 60 to 250 g/10 min, and most preferably from 70 to 130 g/10 min. All preferred embodiments of the ethylene-1-butene copolymer as described herein are also preferred embodiments of this specific embodiment of the ethylene-1-butene copolymer.

Preferably, the ethylene-1-butene copolymer has a density measured according to ISO1183 in the range of from 850 to 900 kg/m³, more preferably from 860 to 885 kg/m³.

Preferably, the ethylene-1-butene copolymer has units derived from 1-butene in an amount of from 15 to 50 wt.-%, more preferably 15 to 37 wt.-%, more preferably 17 to 35 wt.-%, more preferably 19 to 32 wt.-%, and most preferably 21 to 30 wt.-%, based on the total weight of the ethylene-1-butene copolymer.

As discussed above, the solution polymerization process according to the invention allows the production of ethylene-1-butene copolymers having a high weight average molecular weight (Mw), such as even exceeding 500 000 g/mol, and at the same time maintaining a rather narrow molecular weight distribution (MWD).

Preferably, the ethylene-1-butene copolymer has a weight average molecular weight (Mw), determined by Gel Permeation Chromatography, in the range of from 15000 to 600 000 g/mol, more preferably from 20000 to 300 000 g/mol, more preferably from 40000 to 150 000 g/mol, and most preferably from 45000 to 105 000 g/mol.

Preferably, the ethylene-1-butene copolymer has a number average molecular weight (Mn), determined by Gel Permeation Chromatography, in the range of from 12000 to 48000 g/mol, more preferably from 14000 to 45000 g/mol, more preferably from 17000 to 42000 g/mol, and most preferably from 20000 to 37000 g/mol.

Preferably, the ethylene-1-butene copolymer has a molecular weight distribution (MWD), determined by Gel Permeation Chromatography, in the range of from 2.0 to 4.0, more preferably from 2.2 to 3.5, and most preferably from 2.3 to 3.2.

Preferably, the ethylene-1-butene copolymer has a comonomer content in the range of from 14.0 to 105 CH3/1000 C as determined by NMR.

Preferably, the ethylene-1-butene copolymer has
a melt flow rate MFR₂, measured according to ISO1133 at 190 °C and a load of 2.16 kg, in a range of from 0.5 to 20 g/10 min,
a density measured according to ISO1183 in the range of from 850 to 900 kg/m³,
a weight average molecular weight (Mw), determined by Gel Permeation Chromatography, in the range of from 45000 to 105000 g/mol,
a molecular weight distribution (MWD), determined by Gel Permeation Chromatography, in the range of from 2.3 to 3.2, and
units derived from 1-butene in an amount of from 15 to 37 wt.-%.

The invention also relates to an ethylene-1-butene copolymer obtained by the process according to the invention.

All preferred embodiments of the process of the invention are also preferred embodiments of the ethylene-1-butene copolymer obtained by the process according to the invention.

### Experimental Part

### 1. Methods

The measurement methods apply to the parameters mentioned in the description of the invention and the examples below.

### a) Melt Flow Rate

The melt flow rate (MFR) was determined according to ISO 1133 and is indicated in g/10 min. The MFR is an indication of the melt viscosity of the polymer. The MFR was determined at 190 °C for polyethylene with a load of 2.16 kg (MFR₂).

### b) Density

The density of the copolymer was measured according to ISO 1183 (method A) on compression moulded specimen prepared according to EN ISO 1872-2 (Feb 2007) and is given in kg/m³.

### c) Determination of the Molecular weight averages, molecular weight distribution

Molecular weight averages (Mz, Mw and Mn), Molecular weight distribution (MWD) and its broadness, described by polydispersity index, PDI = Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ ${M}_{w} = \frac{{\sum }_{i = 1}^{N} \left({A}_{i}\times {M}_{i}\right)}{{\sum }_{i = 1}^{N} {A}_{i}}$ ${M}_{z} = \frac{{\sum }_{i = 1}^{N} \left({A}_{i}\times {M}_{i}^{2}\right)}{{\sum }_{i = 1}^{N} \left({A}_{i}/{M}_{i}\right)}$

For a constant elution volume interval ΔVᵢ, where Aᵢ, and Mᵢ are the chromatographic peak slice area and polyolefin molecular weight (MW), respectively associated with the elution volume, Vᵢ, where N is equal to the number of data points obtained from the chromatogram between the integration limits.

A high temperature GPC instrument, equipped with a multiple band infrared detector model IR5 (PolymerChar, Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C at a constant flow rate of 1 mL/min. 200 µL of sample solution was injected per analysis. Data collection was performed by using PolymerChar GPC-one software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyethylene molecular weights is accomplished by using the Mark Houwink equation and the following Mark Houwink constants: ${K}_{PS} = 19 \times {10}^{- 3} mL / g , {α}_{PS} = 0.655$ ${K}_{PE} = 39 \times {10}^{- 3} mL / g , {α}_{PE} = 0.725$

A third order polynomial fit was used to fit the calibration data.

All samples were prepared in the concentration range of 0.5 to 1 mg/ml and dissolved at 160°C for 3 hours under continuous gentle shaking.

### d) Quantitative nuclear-magnetic resonance (NMR) spectroscopy was used to quantify the comonomer content of the copolymers

Quantitative ¹³C{¹H} NMR spectra recorded in the molten-state using a Bruker Avance III 500 NMR spectrometer operating at 500.13 and 125.76 MHz for ¹H and ¹³C respectively. All spectra were recorded using a ¹³C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 1024 (1k) transients were acquired per spectrum.

Quantitative ¹³C{¹H} NMR spectra were processed, integrated and quantitative properties determined using custom spectral analysis automation programs. All chemical shifts are internally referenced to the bulk methylene signal (δ+) at 30.00 ppm (J. Randall, Macromol. Sci., Rev. Macromol. Chem. Phys. 1989, C29, 201).

Characteristic signals corresponding to the incorporation of 1-butene were observed (J. Randall, Macromol. Sci., Rev. Macromol. Chem. Phys. 1989, C29, 201.) and all contents calculated with respect to all other monomers present in the polymer with the limit of quantification being 0.2 mol% of butene.

Characteristic signals resulting from isolated 1-butene incorporation i.e. EEBEE comonomer sequences, were observed. Isolated 1-butene incorporation was quantified using the integral of the signal at 39.8 ppm assigned to the *B2 sites, accounting for the number of reporting sites per comonomer: $B = {I}_{∗ B 2}$

When characteristic signals resulting from consecutive 1-butene incorporation i.e. EBBE comonomer sequences were observed, such consecutive 1-butene incorporation was quantified using the integral of the signal at 39.3 ppm assigned to the ααB2B2 sites accounting for the number of reporting sites per comonomer: $BB = 2 {* I}_{ααB 2 B 2}$

When characteristic signals resulting from non consecutive 1-butene incorporation i.e. EBEBE comonomer sequences were also observed, such non-consecutive 1-butene incorporation was quantified using the integral of the signal at 24.7 ppm assigned to the ββB2B2 sites accounting for the number of reporting sites per comonomer: $BEB = 2 {* I}_{ββB 2 B 2}$

Due to the overlap of the *B2 and *βB2B2 sites of isolated (EEBEE) and non-consecutively incorporated (EBEBE) 1-butene respectively the total amount of isolated 1-butene incorporation is corrected based on the amount of non-consecutive 1-butene present: $B = {I}_{∗ B 2} - 2 {* I}_{ββB 2 B 2}$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences: ${B}_{total} = B + BB + BEB$

Characteristic signals resulting from saturated end-groups were observed. The content of such saturated end-groups was quantified using the average of the integral of the signals at 22.8 and 32.2 ppm assigned to the 2s and 3s sites respectively: $S = \left(1/2\right) * \left({I}_{2 S}+{I}_{3 S}\right)$

The relative content of ethylene was quantified using the integral of the bulk methylene (δ+) signals at 30.00 ppm: $E = \left(1/2\right) * {I}_{δ +}$

The total ethylene comonomer content was calculated based the bulk methylene signals and accounting for ethylene units present in other observed comonomer sequences or end-groups: ${E}_{total} = E + \left(5/2\right) * B + \left(7/2\right) * BB + \left(9/2\right) * BEB + \left(3/2\right) * S$

The total mole fraction of 1-butene in the polymer was then calculated as: $fB = {B}_{total} / \left({E}_{total}+{B}_{total}\right)$

The total comonomer incorporation of 1-butene in mole percent was calculated from the mole fraction in the usual manner: $B \left[mol%\right] = 100 * fB$

The total comonomer incorporation of 1-butene in weight percent was calculated from the mole fraction in the standard manner: $B \left[wt%\right] = 100 * \left(fB*56.11\right) / \left(\left(fB*56.11\right)+\left(\left(1-fB\right)*28.05\right)\right)$

### 2. Examples

For the following examples, (Phenyl)(cyclohexyl)methylene (cyclopentadienyl) (2,7-di-*tert*-butylfluoren-9-yl)hafnium dimethyl), produced according to WO2018/108918, was used as catalyst.

As cocatalyst N,N-Dimethylanilinium Tetrakis(pentafluorophenyl)borate (AB) (CAS 118612-00-3) was used, commercially available from Boulder.

Polymerization was done with Borealis proprietor solution polymerization technology, in the presence of metallocene catalyst (phenyl)(cyclohexyl) methylene (cyclopentadienyl) (2,7-di-tert-butylfluorenyl) hafnium dimethyl and N,N-Dimethylanilinium Tetrakis(pentafluorophenyl)borate (AB) (CAS 118612-00-3) as cocatalyst.

The polymerization example was done in the TU Darmstadt solution polymerization tool and the reactor volume was 0.26 liters. Pressure and temperature for each example are given in the respective Tables below. The catalyst, borate (AB), monomer (ethylene), comonomer (butene), scavenger (TEAL) and solvent (hexane) were continuously fed into the reactor, the feeds are also given in the respective Tables below.

**Table 1: Polymerization conditions for inventive examples IE1 to IE6**

| | **IE1** | **IE2** | **IE3** | **IE4** | **IE5** | **IE6** |
|---|---|---|---|---|---|---|
| temperature, °C | 105 | 110 | 105 | 105 | 105 | 105 |
| pressure, bar | 130 | 130 | 130 | 130 | 130 | 130 |
| sample collection time, min | 10 | 15 | 15 | 15 | 15 | 15 |
| catalyst concentration, g/l | 0.14 | 0.14 | 0.14 | 0.14 | 0.14 | 0.14 |
| borate concentration, g/l | 0.196 | 0.196 | 0.196 | 0.196 | 0.196 | 0.196 |
| TEA concentration, mmol/l | 2.5 | 2.5 | 2.5 | 2.5 | 2.5 | 2.5 |
| ethene feed, g/h | 30 | 30 | 30 | 30 | 30 | 30 |
| butene feed (fed at 10 °C at pump heads), ml/min | 0.672 | 0.42 | 0.588 | 0.546 | 0.546 | 0.546 |
| catalyst feed, ml/min | 1.25 | 1.25 | 1.25 | 1.25 | 1.25 | 1.25 |
| borate feed, ml/min | 1.25 | 1.25 | 1.25 | 1.25 | 1.25 | 1.25 |
| TEA (scavenger) feed, ml/min | 2.75 | 2.75 | 2.75 | 2.75 | 2.75 | 2.75 |
| hexane feed, ml/min | 9 | 9 | 9 | 9 | 9 | 9 |

The properties of the ethylene-1-butene copolymers IE1 to IE6 are given in Table 2 below.

**Table 2: Properties of Inventive Examples IE1 to IE6**

| | **IE1** | **IE2** | **IE3** | **IE4** | **IE5** | **IE6** |
|---|---|---|---|---|---|---|
| Mn, g/mol | 20400 | 20400 | 23900 | 35200 | 36200 | 33900 |
| Mw, g/mol | 48300 | 48400 | 56500 | 89700 | 96600 | 103000 |
| Mz, g/mol | 90400 | 92400 | 111000 | 150000 | 162000 | 179000 |
| MWD (Mw/Mn) | 2.37 | 2.37 | 2.36 | 2.55 | 2.67 | 3.04 |
| C4%, wt.% | 36.5 | 19.5 | 32.8 | 31.55 | 31.05 | 30.99 |
| density, kg/m3 | 854 | 881 | 860 | 862 | 863 | 863 |
| MFR2, g/10min | 12.2 | 12.1 | 6.9 | 1.3 | 1.0 | 0.8 |

**Table 3: Polymerization conditions for inventive examples IE7 to IE11**

| | **IE7** | **IE8** | **IE9** | **IE10** | **IE11** |
|---|---|---|---|---|---|
| temperature, °C | 130 | 130 | 130 | 130 | 130 |
| pressure, bar | 130 | 130 | 130 | 130 | 130 |
| sample collection time, min | 10 | 10 | 10 | 10 | 10 |
| catalyst concentration, g/l | 0.14 | 0.14 | 0.14 | 0.14 | 0.14 |
| borate concentration, g/l | 0.196 | 0.196 | 0.196 | 0.196 | 0.196 |
| TEA concentration, mmol/l | 2.5 | 2.5 | 2.5 | 2.5 | 2.5 |
| ethene feed, g/h | 30 | 30 | 30 | 30 | 30 |
| butene feed (fed at 10 °C at pump heads), ml/min | 0.168 | 0.336 | 0.504 | 0.672 | 0.84 |
| catalyst feed, ml/min | 1.25 | 1.25 | 1.25 | 1.25 | 1.25 |
| borate feed, ml/min | 1.25 | 1.25 | 1.25 | 1.25 | 1.25 |
| TEA (scavenger) feed, ml/min | 2.75 | 2.75 | 2.75 | 2.75 | 2.75 |
| hexane feed, ml/min | 9 | 9 | 9 | 9 | 9 |

**Table 4: Polymerization conditions for inventive examples IE12 to IE15**

| | **IE12** | **IE13** | **IE14** | **IE15** |
|---|---|---|---|---|
| temperature, °C | 110 | 110 | 110 | 110 |
| pressure, bar | 130 | 130 | 130 | 130 |
| sample collection time, min. | 10 | 10 | 10 | 10 |
| catalyst concentration, g/l | 0.14 | 0.14 | 0.14 | 0.14 |
| borate concentration, g/l | 0.196 | 0.196 | 0.196 | 0.196 |
| TEA (scavenger) concentration, mmol/I | 2.5 | 2.5 | 2.5 | 2.5 |
| ethene feed, g/h | 30 | 30 | 30 | 30 |
| butene feed (fed at 10 °C at pump heads), ml/min | 0.168 | 0.336 | 0.504 | 0.672 |
| catalyst feed, ml/min | 1.25 | 1.25 | 1.25 | 1.25 |
| borate feed, ml/min | 1.25 | 1.25 | 1.25 | 1.25 |
| TEA (scavenger) feed, ml/min | 2.75 | 2.75 | 2.75 | 2.75 |
| hexane feed, ml/min | 9 | 9 | 9 | 9 |

**Table 5: Polymerization conditions for inventive examples IE16 to IE19**

| | **IE16** | **IE17** | **IE18** | **IE19** |
|---|---|---|---|---|
| temperature, °C | 95 | 95 | 95 | 95 |
| pressure, bar | 130 | 130 | 130 | 130 |
| sample collection time, min. | 10 | 10 | 10 | 10 |
| catalyst concentration, g/l | 0.14 | 0.14 | 0.14 | 0.14 |
| borate concentration, g/l | 0.196 | 0.196 | 0.196 | 0.196 |
| TEA (scavenger) concentration, mmol/I | 2.5 | 2.5 | 2.5 | 2.5 |
| ethene feed, g/h | 30 | 30 | 30 | 30 |
| butene feed (fed at 10 °C at pump heads), ml/min | 0.168 | 0.336 | 0.504 | 0.672 |
| catalyst feed, ml/min | 1.25 | 1.25 | 1.25 | 1.25 |
| borate feed, ml/min | 1.25 | 1.25 | 1.25 | 1.25 |
| TEA (scavenger) feed, ml/min | 2.75 | 2.75 | 2.75 | 2.75 |
| hexane feed, ml/min | 9 | 9 | 9 | 9 |

**Table 6: Properties of Inventive Examples IE7 to IE19**

| | **CH3/1000C** | **Mw, g/mol** | **Mn, g/mol** | **MWD** |
|---|---|---|---|---|
| **IE7** | 36.6 | 43196 | 16243 | 2.7 |
| **IE8** | 55.0 | 34813 | 14227 | 2.4 |
| **IE9** | 73.4 | 28553 | 12349 | 2.3 |
| **IE10** | 88.5 | 25466 | 11553 | 2.2 |
| **IE11** | 101.7 | 25039 | 10736 | 2.3 |
| **IE12** | 34.0 | 75211 | 31264 | 2.4 |
| **IE13** | 57.5 | 65552 | 28048 | 2.3 |
| **IE14** | 76.5 | 53720 | 24716 | 2.2 |
| **IE15** | 92.5 | 47712 | 21829 | 2.2 |
| **IE16** | 24.0 | 569163 | 149379 | 3.8 |
| **IE17** | 42.1 | 483538 | 124768 | 3.9 |
| **IE18** | 66.9 | 222366 | 73635 | 3.0 |
| **IE19** | 91.1 | 141515 | 53730 | 2.6 |

Inventive examples IE16 and IE17 demonstrate that a low polymerization temperatures of 95 °C, an Mw of about 500 000 to 600 000 g/mol can be obtained at a relatively narrow MWD of below 4.0.

## Claims

1. A solution polymerization process for producing an ethylene-1-butene copolymer, the process comprising the steps of
a) feeding ethylene, 1-butene, a metallocene catalyst system and a solvent into a first reactor,
b) polymerizing in the first reactor ethylene and 1-butene in the presence of the metallocene catalyst system and the solvent at a pressure of from 50 to 300 bar and a temperature of from 95 to 135 °C to form the ethylene-1-butene copolymer,
wherein the metallocene catalyst system comprises, or consists of,
(i) a metallocene complex of formula (I), 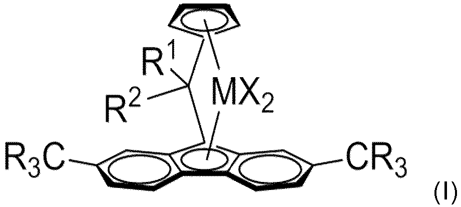 wherein
M is Hafnium,
R are the same or different from each other and can be a saturated linear or branched C₁ to C₁₀ alkyl, preferably all R are the same and are a linear or branched C₁ to C₃ alkyl, more preferably all R are a C₁ alkyl group,
R¹ is an unsubstituted C₆ to C₁₀ aryl, preferably phenyl and
R² is a C₄ to C₂₀ cycloalkyl group or a C₄ to C₆ alkenyl groups,
X is a C₁ to C₆ alkyl, preferably methyl, and
(ii) a cocatalyst.
c) withdrawing the ethylene-1-butene copolymer from the first reactor, **characterized in that** the ethylene-1-butene copolymer has a melt flow rate MFR₂, measured according to ISO1133 at 190 °C and a load of 2.16 kg, in the range of from 0.1 to 990 g/10 min or in the range of from 47 to 990 g/10 min.

2. The solution polymerization process according to claim 1, wherein the polymerization in step b) is conducted at a pressure of from 60 to 250 bar.

3. The solution polymerization process according to any one of the preceding claims, wherein the solvent in step b) is a hydrocarbon solvent.

4. The solution polymerization process according to claim 3, wherein the hydrocarbon solvent is a C₅-₁₂-hydrocarbon, which may be unsubstituted or substituted by C₁-₄ alkyl group, selected from pentane, methyl pentane, hexane, heptane, octane, cyclohexane, methylcyclohexane and hydrogenated naphtha.

5. The solution polymerization process according to any one of the preceding claims, wherein the metallocene catalyst system comprises
(i) at least one metallocene complex of formula (I) as defined in claim 1,
(ii) an aluminoxane cocatalyst and/or a boron containing cocatalyst, and
(iii) optionally an aluminium alkyl compound Al(R⁶)₃, with R⁶ being a linear or branched C₂-C₈-alkyl group.

6. The solution polymerization process according to anyone of the preceding claims, wherein the metallocene complex of formula (I) is a metallocene complex of formula (Ia) 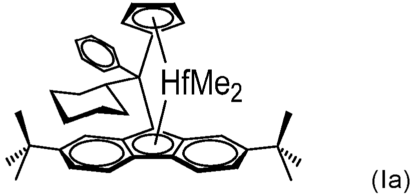
((Phenyl)(cyclohexyl)methylene(cyclopentadienyl)(2,7-di-tert-butylfluoren-9-yl)hafnium dimethyl), or
the metallocene complex of formula (I) is a metallocene complex of formula (Ib) 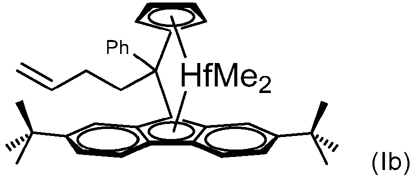 ((Phenyl)(3-buten-1-yl)methylene(cyclopentadienyl) (2,7-di-tert-butylfluoren-9-yl) hafnium dimethyl),
wherein the cocatalyst (ii) is a boron containing cocatalyst.

7. The solution polymerization process according to any one of the preceding claims, wherein the ethylene-1-butene copolymer has a melt flow rate MFR₂, measured according to ISO1133 at 190 °C and a load of 2.16 kg, in the range of from 0.1 to 500 g/10 min.

8. The solution polymerization process according to any one of the preceding claims, wherein the ethylene-1-butene copolymer has a density measured according to ISO1183 in the range of from 850 to 900 kg/m³.

9. The solution polymerization process according to any one of the preceding claims, wherein the ethylene-1-butene copolymer has units derived from 1-butene in an amount of from 15 to 37 wt.-% based on the total weight of the ethylene-1-butene copolymer.

10. The solution polymerization process according to any one of the preceding claims, wherein the ethylene-1-butene copolymer has a weight average molecular weight (Mw), determined by Gel Permeation Chromatography, in the range of from 15000 to 600000 g/mol.

11. The solution polymerization process according to any one of the preceding claims, wherein the ethylene-1-butene copolymer has a number average molecular weight (Mn), determined by Gel Permeation Chromatography, in the range of from 12000 to 48000 g/mol.

12. The solution polymerization process according to any one of the preceding claims, wherein the ethylene-1-butene copolymer has a molecular weight distribution (MWD), determined by Gel Permeation Chromatography, in the range of from 2.0 to 4.0.

13. The solution polymerization process according to any one of the preceding claims, wherein the ethylene-1-butene copolymer has a comonomer content in the range of from 14.0 to 105 CH3/1000 C as determined by NMR.

14. The solution polymerization process according to any one of the preceding claims, wherein in step a) ethylene, 1-butene, the metallocene catalyst system and the solvent are continuously fed into the first reactor.

15. Ethylene-1-butene copolymer obtained by the process according to any one of the preceding claims.
